# EUROPEAN PATENT SPECIFICATION

(11) **EP 0 781 800 B1**
(45) Date of publication and mention of the grant of the patent: **21.05.2003**
(21) Application number: 96120891.5
(22) Date of filing: 27.12.1996
(51) Int. Cl.: C08K 5/3435, C08K 5/3492, C08K 3/22, C08K 3/34

(54) **Polyolefin resin composition**
Polyolefin-Harzzusammensetzung
Composition à base de résine de polyoléfine

(30) Priority: 25.12.1995 JP 33689895
(43) Date of publication of application: 02.07.1997
(73) Proprietor: Sumitomo Chemical Company, Limited, Chuo-ku Osaka 541-8550 (JP)
(72) Inventor: Fujita, Tsutomu, Toyonaka-shi, Osaka-fu (JP); Sakaya, Taiichi, Takatsuki-shi, Osaka-fu (JP); Negawa, Hideo, Shiga-cho, Shiga-gun, Shiga-ken, (JP); Kudo, Aki, Ibaraki-shi, Osaka-fu (JP)
(74) Representative: VOSSIUS & PARTNER

(56) References cited:
- EP-A- 0 549 340
- EP-A- 0 715 954
- PATENT ABSTRACTS OF JAPAN vol. 013, no. 500 (M-891), 10 November 1989 & JP 01 200957 A (MITSUBISHI KASEI VINYL CO), 14 August 1989, & DATABASE WPI Derwent Publications Ltd., London, GB; AN 89-274981

## Description

The present invention relates to a polyolefin resin composition having good weather resistance and a resin film having at least one layer comprising said resin composition.

In these years, an amount of the resins which are used for the production of shaped articles used outdoors such as automobile materials, construction materials, agricultural materials, etc. has been rapidly Increased.

An example of the shaped articles used outdoors is an agricultural film for constructing green houses or tunnels used in a horticulture. Hitherto, polyvinyl chloride films, polyolefin resin films such as polyethylene films and ethylene-vinyl acetate copolymer films have been used as the agricultural films.

However, the polyolefin resins suffer from deterioration of a retention rate of elongation or tensile strength caused by an oxidation reaction when they are exposed to the sun light in the presence of oxygen, and therefore, they do not have sufficient weather resistance as the agricultural films.

Thus, various polyolefin resin compositions comprising a variety of weathering stabilizers such as antioxidants, UV light absorbers, etc. have been developed for the improvement of weather resistance.

Among those weathering stabilizers, hindered amine compounds are preferably used, since they can greatly improve the weather resistance and maintain such effects for a long time, or they can suppress the change of gloss or color tone due to the deterioration of the articles which are made of the polyolefin resin compositions, even when they are added in a small amount (see, for example, JP-A-59-86645 corresponding to EP-A-107615 and US Patent No. 5,102,927, and JP-A-2-167350 corresponding to EP-A-389 640). JP-A-56-41254 discloses a thermoplastic resin film with improved weather resistance which contains a hindered amine compound and inorganic fine particles having a polarity and a surface area of 10 m²/g or larger.

However, the above conventional resin compositions containing the weather stabilizers do not satisfactorily suppress the deterioration of the weather resistance, that is, the deterioration of the mechanical properties, in an atmosphere exposed to agrochemicals, acidic rain, etc.

EP-A-0 715 954 which is prior art under Art 54(3) and (4) EPC discloses a laminated polyolefin resin film having an inner layer which contains 88-70 wt% of a polyolefin resin and 12 to 30 wt% of a double hydroxide; this film is said to be excellent in high frequency heat sealability.

An object of the present invention is to provide a resin composition which solves the above problems, in particular, a polyolefin resin composition having good weather resistance.

According to the first aspect, the present invention provides a polyolefin resin composition comprising
a polyolefin resin,
not less than 0.03 wt% and less than 12 wt% based on the weight of whole composition, of a double hydroxide comprising lithium, aluminum and at least one element selected from the group consisting of alkaline earth elements, transition metals, Zn and Si, and
0.02 to 5 wt. %, based on the weight of whole composition, of a hindered amine compound.

According to the second aspect, the present invention provides a film having at least one layer comprising the polyolefin resin composition of the present invention.

The present invention will be explained in detail.

The double hydroxide used according to the present invention comprises lithium, aluminum and at least one element selected from the group consisting of alkaline earth elements, transition metals, Zn and Si as well as the hydroxyl group(s).

Among the alkaline earth metals, magnesium and calcium are preferred. Among the transition metals, divalent or trivalent iron, cobalt, nickel and manganese are preferred. In particular, iron is preferred.

The molar ratio of aluminum to lithium (Al:Li) is usually between 1.5:1 and 2.5:1, preferably between 1.8:1 and 2.5:1.

The molar amount (a) of at least one element selected from the group consisting of alkaline earth elements, transition metals, Zn and Si is larger than 0 mole and smaller than 1.5 (0 < a < 1.5), preferably between 0.1 and 1.4 (0.1 ≤ a ≤ 1.4), more desirably between 0.2 and 1.2 (0.2 ≤ a ≤ 1.2), per one mole of the lithium element.

In general, the double hydroxide consists of a cationic moiety and an anionic moiety which are ionically bonded, and the cationic moiety contains at least lithium and aluminum.

Examples of the element or compound constituting the anionic moiety are inorganic acid ions (e.g. polysilicate such as pyrosilicate, cyclosilicate, inosilicate, phyllosilicate, tektosilicate ions; carbonate, halide, sulfate, sulfite, nitrate, nitrite, phosphate, phosphite, hypophosphite, polyphosphate, aluminate, silicate, perchlorate, borate ions, etc.), anionic transition metal complexes (e.g. Fe(CN)₆³⁻, Fe(CN)₆⁴⁻, etc.), and organic acid ions (e.g. acetate, benzoate, formate, terephthalate, alkylsulfonate ions, etc.). Among them, the carbonate, halide, phosphate, polyphosphate, sulfate, silicate, polysilicates and perchlorate ions are preferable, and the carbonate polyphosphate and polysilicate ions are more preferable.

Specific examples of the double hydroxide are a double hydroxide comprising lithium, aluminum, magnesium and carbonate ion in the molar ratio of lithium/aluminum/magnesium of about 1/2.3/0.28 (trade name: LMA manufactured by Fuji Chemical Industries, Co., Ltd.), a double hydroxide containing lithium, aluminum and silicon, in the molar ratio of lithium/aluminum/silicon of about 1/2/1.2 (trade name: FUJIRAIN LS manufactured by Fuji Chemical Industries, Co., Ltd.).

The average particle size of the double hydroxide is usually 5 µm or less, preferably between 0.05 and 3 µm, more desirably between 0.1 and 1 µm.

The specific surface area of the double hydroxide is usually between 1 and 30 m²/g, preferably between 2 and 10 m²/g when measured by the BET method. When the polyolefin resin composition of the present invention is used for the production of films which are required to have transparency, the refractive index of the double oxide is preferably close to or equal to that of the polyolefin resin composition. The refractive Index of the double hydroxide measured according to JIS K 0062 Is usually between 1.470 and 1.550, preferably between 1.480 and 1.540, more desirably between 1.490 and 1.530.

The double hydroxide may contain crystal water.

The amount of the double hydroxide is not less than 0.03 and less than 12 wt. % based on the weight of the whole resin composition in view of the improvement of weather resistance.

The double hydroxide may be calcined prior to compounding for the purpose of preventing foaming in a shaping step. For example, the calcination is performed at a high temperature in an inert gas atmosphere.

The double hydroxide may be surface treated with a dispersing agent for improving the dispersibility of the double hydroxide particles in the polyolefin resin composition or film.

Examples of the dispersing agent are higher fatty acids (e.g. stearic acid, palmitic acid, lauric acid, etc.), metal soaps (e.g. calcium, zinc, magnesium, barium, sodium salts of higher fatty acids), esters of phosphoric acids, silane coupling agents, aluminum coupling agents, zirconium coupling agents, waxes, and the like.

Any surface treating method can be used as long as the dispersing agent can be adhered uniformly to the surfaces of the double hydroxide particles. For example, a slurry of the double hydroxide in a suitable solvent is mixed with the dispersing agent and stirred.

The hindered amine compound is a 2,2,6,6-tetraalkyl piperidine derivative having a substituent at the 4-position, and preferably has a molecular weight of 250 or larger. Examples of the substituent at the 4-position are an carboxyl group, an alkoxy group, an alkylamino group, and so on. Further, a N-position may be substituted by an alkyl group. Preferred examples of such hindered amine compound are the hindered amine compound-containing stabilizers (trade names: TINUVIN 492 and TINUVIN 494 available from Ciba-Geigy) which are disclosed in JP-A-63-286448, and the following compounds (1) to (23): 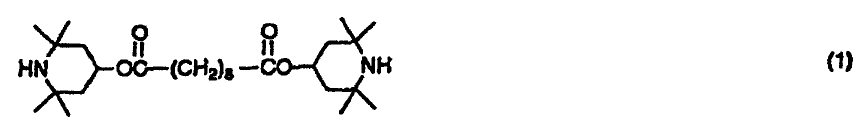 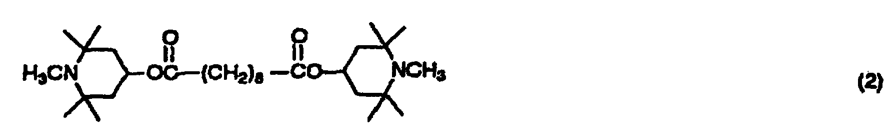 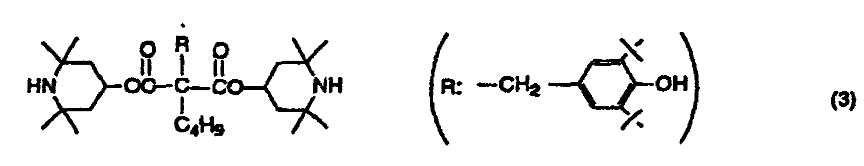 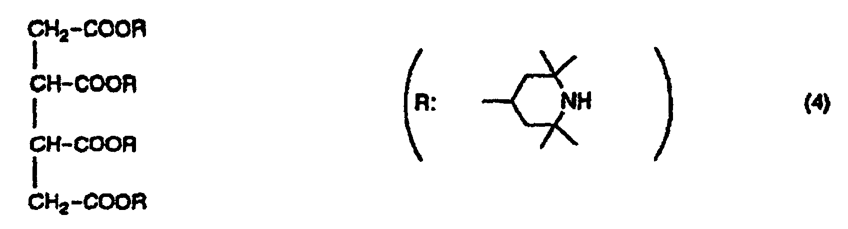 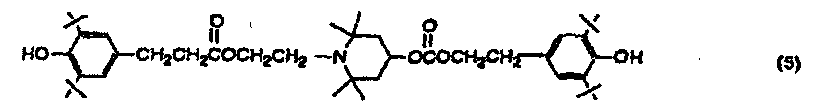 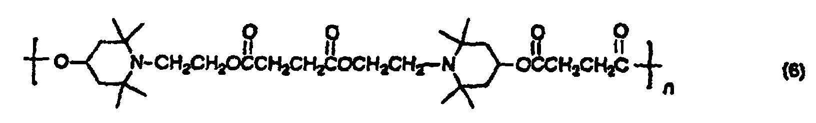 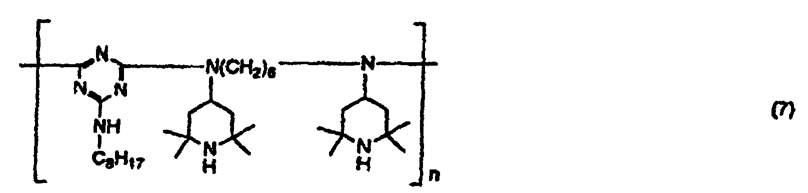 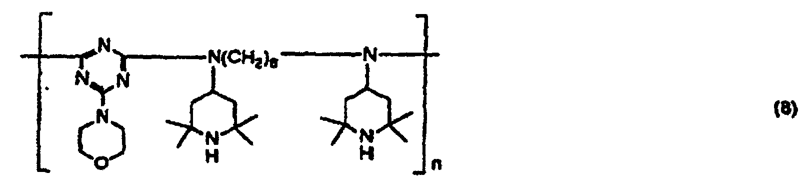 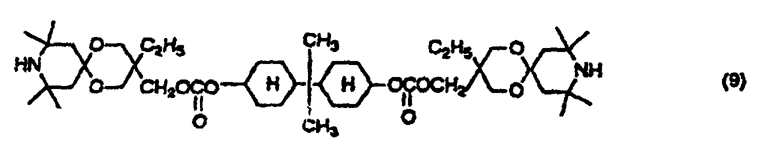 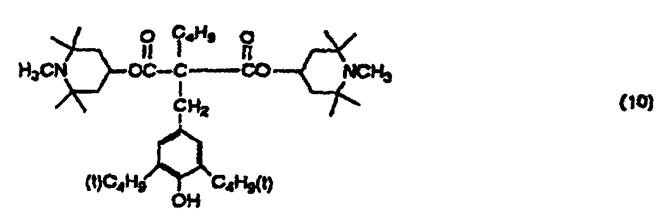 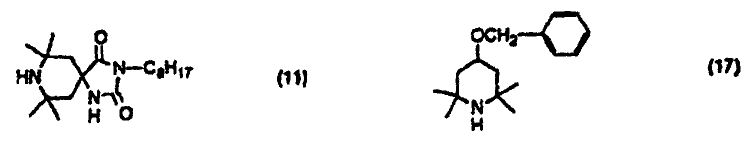 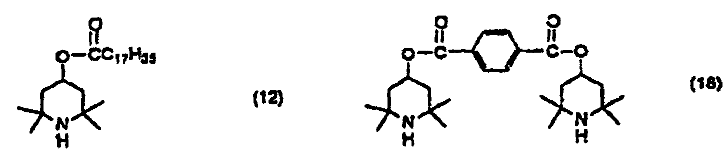 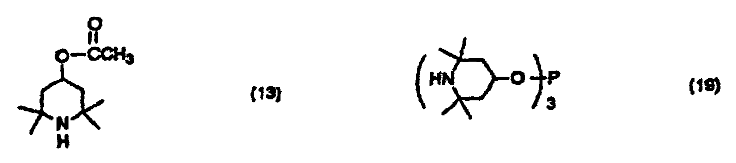 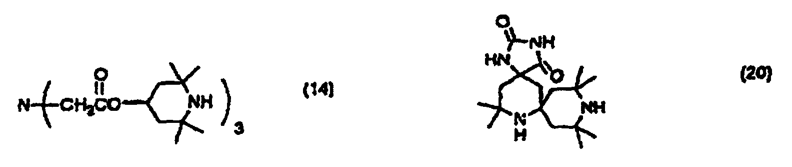 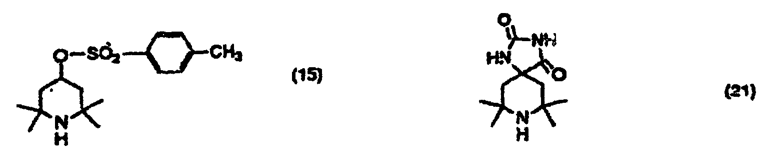 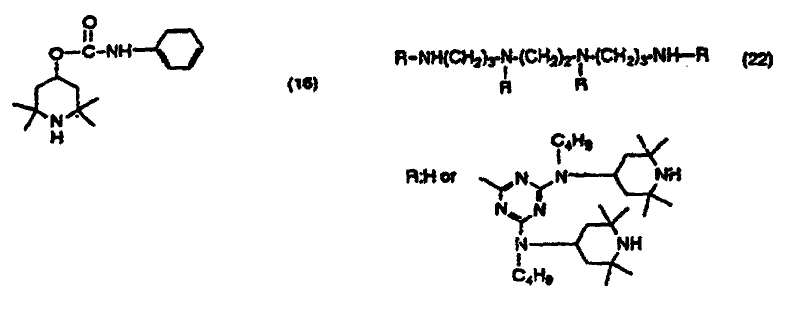 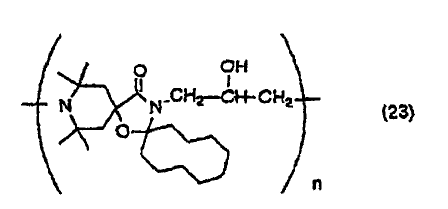 n ≥ 2

The content of the hindered amine compound in the resin composition of the present invention is between 0.02 and 5 wt. %, preferably between 0.1 and 2 wt. % based on the weight of the whole resin composition. When the content of the hindered amine compound is less than 0.02 wt. %, the weather resistance is not sufficiently improved, while when it exceeds 5 wt. %, blooming sometimes occurs. The hindered amine compounds may be used independently or as a mixture of two or more of them.

The polyolefin resin includes homopolymers of α-olefins (e.g. polyethylene, polypropylene, etc.), ethylene-α-olefin copolymers (e.g. ethylene-propylene copolymers, ethylene-butene-1 copolymers, ethylene-4-methyl-1-pentene copolymers, ethylene-hexene copolymers, etc.), and copolymers of ethylene and different monomers comprising the α-olefin as a main component (e.g. ethylene-vinyl acetate copolymer, ethylene-acrylic acid copolymers, ethylene-methyl methacrylate copolymers, ethylene-vinyl acetate-methyl methacrylate copolymers, ionomer resins, etc.).

When the resin composition of the present invention Is used for the production of the agricultural films, polyethylene, ethylene-α-olefin copolymers, and ethylene-vinyl acetate copolymers containing 30 wt. % or less of vinyl acetate are preferable, in view of the transparency, weather resistance, and costs.

The amount of the polyolefin resin in the composition depends on the amounts of the double hydroxide and hindered amine compound, and is usually between 99.5 and 35 wt. % based on the weight of the whole resin composition.

The resin composition of the present invention may contain a UV light absorber for further improvement of the weather resistance. Examples of the UV light absorbers are benzophenone UV light absorbers, benzotriazole UV light absorbers, benzoate UV light absorbers, and cyanoacrylate UV light absorbers. Specific examples of the UV light absorbers are the following compounds (24) to (32):

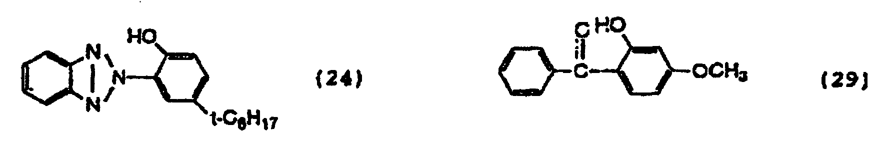

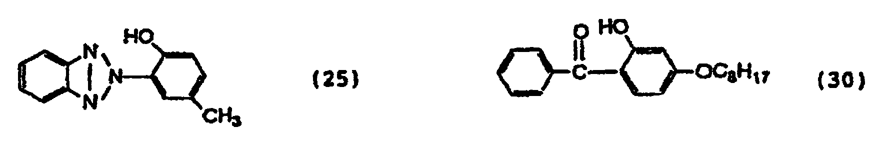

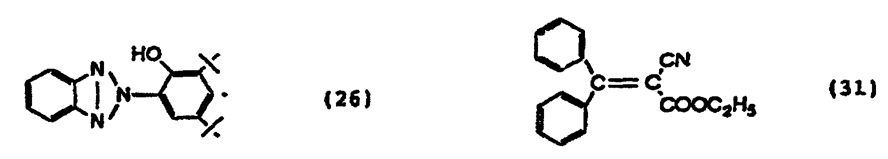

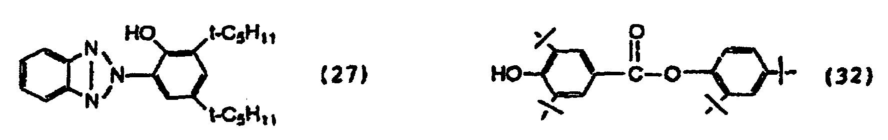

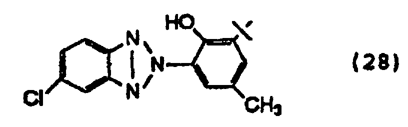

The UV light absorbers may be used independently or as a mixture of two or more of them.

The amount of the UV light absorber to be optionally contained in the resin composition of the present invention is between 0.01 and 3 wt. parts, preferably between 0.05 to 1 wt. parts per 100 wt. parts of the polyolefin resin composition.

The polyolefin resin composition of the present invention may further contain various other inorganic compounds, Examples of the other inorganic compounds are oxides, hydroxides, carbonates, sulfates, phosphates, silicates, aluminates and aluminosilicates of metals such as lithium, sodium, potassium, magnesium, calcium, zinc, aluminum, silicon, titanate, etc.; a hydrotalcite compound of the formula (I):

M₁₋ₓAl³⁺ ₓ(OH⁻)₂(A₁ⁿ⁻)_{x/n}.mH₂O (I)

wherein M is a divalent metal ion selected from the group consisting of Mg²⁺, Ca²⁺ and Zn²⁺, A₁ⁿ⁻ is a n-valent anion, e.g. an anionic moiety as disclosed above, x is a number of larger than 0 and smaller than 0.5, m is a number of larger than 0 and smaller than 2, and n Is an integer of 1 to 4; and a lithium-aluminum double hydroxide of the formula (II):

Li⁺(Al³⁺)₂(OH)₆.(A₂ⁿ⁻)_{1/n}.mH₂O (II)

wherein A₂ⁿ⁻ is a n-valent anion except a n-valent anion containing the alkaline earth metals, transition metals, zinc and silicon, n is an Integer of 1 to 4, m is a number between 0 and 3. The double hydroxide of the formula (II) is disclosed in JP-A-5-179052.

The amount of the other inorganic compound to be contained in the polyolefin resin composition of the present invention is usually between 0.03 and 150 wt. parts, preferably between 0.03 and 30 wt. parts, more desirably between 0.03 and 10 wt. parts per 100 parts of the resin composition.

The polyolefin resin composition of the present invention may contain various types of anti-fogging agents to impart the anti-fogging properties to the resin composition.

Examples of the anti-fogging agents are fluorine-containing compounds having a perfluoroalkyl or ω-hydrofluoroalkyl group, in particular, fluorine-containing surfactants, silicone compounds having an alkylsiloxane group, in particular, silicone surfactants, and the like. Examples of the fluorine-containing surfactant are UNIDINE DS-403, DS-406 and DS-401 (all manufactured by Daikin Industries, Ltd.), and an example of the silicone surfactant is SH-3746 (manufactured by Toray Dow Coming Silicone Co., Ltd.).

The amount of the anti-fogging agent is usually between 0.01 and 4 wt. parts, preferably between 0.02 and 2 wt. parts, more desirably between 0.1 and 1 wt. part per 100 wt. parts of the polyolefin resin composition.

The polyolefin resin composition of the present invention may contain various types of anti-sticking agents to impart the anti-sticking properties to the resin composition. The anti-sticking agent may be In the solid or liquid state at room temperature.

Examples of the solid anti-sticking agent are nonionic surfactant such as sorbitan fatty acid ester surfactant (e.g. sorbitan monostearate, sorbitan monopalmitate, etc.), glycerin fatty acid ester surfactant (e.g. glycerin monolaurate, glycerin monopalmitate, glycerin monostearate, diglycerin dlstearate, triglycerin monostearate, etc.), polyethylene glycol base surfactant (e.g. polyethylene glycol monopalmitate, polyethylene glycol monostearate, etc.), alkylene oxide additives of alkylphenols, esters of sorbitan/glycerin condensates and organic acids, and the like.

Examples of the liquid anti-sticking agent are glycerin fatty acid ester surfactant (e.g. glycerin monooleate, diglycerin monooleate, diglycerin sesquioleate, tetraglycerin monooleate, hexaglycerin monooleate, hexaglycerin pentaoleate, tetraglycerin trioleate, tetraglycerin monolaurate, hexaglycerin monolaurate, etc.), sorbitan fatty acid surfactant (e.g. sorbitan monooleate, sorbitan dioleate, sorbitan trioleate, etc.), and the like.

Preferably, the liquid anti-sticking agent and solid anti-sticking agent are used In combination In view of the transparency of the films and the effect for suppressing the bleed out of the anti-sticking agents onto the film surface during the storage of the films.

The amount of the anti-sticking agent is usually between 0.5 and 3 wt. parts, preferably between 1.5 and 3 wt. parts, more desirably between 2.2 and 2.8 wt. parts per 100 wt. parts of the polyolefin resin composition.

The polyolefin resin composition of the present invention may optionally contain further additives such as waxes, antioxidants, antistatic agents, light stabilizers other than the hindered amine compounds, lubricants, pigments, etc.

The polyolefin resin composition of the present invention may be prepared by mixing and kneading the polyolefin resin, the determined amounts of the double hydroxide and hindered amine compound and other optional additives with a conventional mixing apparatus such as a ribbon blender, a super mixer, a Banbury mixer, a single or twin-screw extruder and the like. The obtained polyolefin resin composition is preferably used for the production of extrusion molded articles, injection molded articles, blow molded articles, and the like. In particular, the polyolefin resin composition of the present invention is used for the production of agricultural films.

The resin film, in particular, the agricultural film may be produced by forming the resin composition In the form of a film by a conventional method such as calendering, T-die extrusion, inflation molding, etc.

The resin film of the present invention has a thickness of between 0.01 and 0.3 mm, In particular, between 0.03 and 0.25 mm. When the film thickness is less than 0.01 mm, the film strength Is insufficient, while when it is larger than 0.3 mm. joining of the films, or covering of the film may be difficult.

To maintain the transparency of the polyolefin resin film according to the present invention for a long time, an anti-sticking coating may be formed on at least one surface of the film in addition to the compounding of the above liquid anti-sticking agent. In the case of the agricultural covering film for the green house or tunnel, the anti-sticking coating is preferably formed on the surface facing the inside of the green house or tunnel.

Examples of the anti-sticking coating are a coating film of an inorganic oxide sol such as colloidal silica and colloidal alumina disclosed in JP-B-49-32668 and JP-B-50-11348, a coating film of a mixture of such the inorganic oxide sol and an organic compound (e.g. a surfactant or a resin) disclosed in JP-B-63-45432, JP-B-63-45717 and JP-B-64-2158 and JP-A-3-207643, a coating film formed from a liquid comprising a surfactant, a film of a hydrophilic resin (e.g. polyvinyl alcohol, polysaccarides, polyacrylic acid, etc.), and the like.

The anti-sticking coating may be formed by coating the anti-sticking material, or laminating a separately formed film of the anti-sticking material on the polyolefin resin film. A coating method is not critical. Two or more anti-sticking coatings may be formed.

The resin film of the present invention includes at least one layer of the polyolefin resin composition of the present invention. When the resin film Is a multilayer film comprising at least one layer of the polyolefin resin composition of the present invention and at least one other layer, the other layer is usually made of a resin, that Is, the other resin layer. The multilayer film may be a two-kind two-layer film, two-kind three-layer film, three-kind three-layer film, and the like. The intermediate layer in the multilayer film having three or more layers Is preferably a layer comprising the polyolefin resin composition of the present invention.

The multilayer film may be produced by T-die extrusion, melt coating, extrusion lamination, dry lamination methods, and the like.

Examples of the other resins are homopolymers of α-olefins (e.g. polyethylene, polypropylene, etc.), ethylene-α-olefin copolymers (e.g. ethylene-propylene copolymers, ethylene-butene-1 copolymers, ethylene-4-methyl-1-pentene copolymers, ethylene-hexene copolymers, etc.), copolymers of ethylene and different monomers comprising the α-olefin as a main component (e.g. ethylene-vinyl acetate copolymer, ethylene-acrylic acid copolymers, ethylene-methyl methacrylate copolymers, ethylene-vinyl acetate-methyl methacrylate copolymers, ionomer resins, etc.).

When the resin film of the present invention is used as the agricultural films, polyethylene, ethylene-α-olefin copolymers, and ethylene-vinyl acetate copolymers containing 30 wt. % or less of vinyl acetate are preferred, in view of the transparency, weather resistance, and costs.

If the adhesion strength between the layer of the polyolefin resin composition of the present invention and the layer of other resin is insufficient, a separate adhesive resin layer is preferably included between them. Any adhesive resin may be used, as long as the layers are not delaminated In practical use. Preferable examples of the adhesive resins are modified olefin polymers having carboxyl groups prepared by chemically bonding an unsaturated carboxylic acid or Its anhydride to olefin polymers such as polyolefins (e.g. polyethylene, polypropylene, polybutene, etc,) or copolymers comprising the olefin as the main component.

Specific examples of the adhesive resins are maleic anhydride-grafted modified polyethylene, maleic anhydride-grafted modified polypropylene, maleic anhydride-grafted modified ethylene-ethyl acrylate copolymers, malelc anhydride-grafted modified ethylene-vinyl acetate copolymers, ionomer resins, and the like. They may be used independently or as a mixture of two or more of them.

The polyolefin resin composition of the present invention has excellent weather resistance and therefore used for the production of appliances, automobile materials, construction materials, and the like.

The resin film comprising the polyolefin resin composition of the present invention has the excellent weather resistance when it Is used as the covering film for the green houses or tunnels or used as mulching films, and is a valuable agricultural film in the horticulture field. Furthermore, the agricultural film according to the present invention has better weather resistance than the conventional agricultural films under the conditions where the film is exposed to light and/or agrochemicals.

In addition, the polyolefin resin composition of the present invention is less degraded or discolored during the continuous molding and processing conditions, and further does not foam during molding and processing. Therefore, it has good molding and processing stability for a long time.

The present invention will be explained by the following examples.

### Examples

In Examples and Comparative Examples, the following test methods were employed.

### Weathering test

A test piece of a film In the shape of JIS No. 1 dumbbell was dipped in a lime-sulfur mixture (a 27.5 % aqueous solution of calcium polysulfide supplied by HOKKO Chemical Industries, Ltd.), which had been diluted with six times volume of water, for 24 hours, followed by washing with water and drying. Then, the test piece was exposed in a Sunshine Weather-O-meter (manufactured by SUGA TEST INSTRUMENTS Co., Ltd.) at a black panel temperature of 63°C for various periods of time.

After the specified time, the test piece was removed from the Weather-O-meter and subjected to a tensile test using AUTOGRAPH DSS 100 (manufactured by SHIMADZU CORPORATION) to measure an elongation (%), and a weathering test time at which the elongation decreased to a half of that of the original test piece (a half-life period of weather resistance) was recorded. The longer half-life period means better weather resistance.

The elongation (%) was calculated according to the following formula:$\text{Elongation (%) =} \text{[(Distance between bench marks (mm) at breakage - distance} \text{between bench marks (mm) before tensile test) x 100]/} \text{(distance between bench marks (mm) before tensile test)}$

### HAZE value end transmission of light

Using a HAZE meter manufactured by SUGA TEST INSTRUMENTS Co., Ltd.), a transmission of light in the whole wavelength range and a HAZE value were measured according to JIS K 7105.

### Example 1

A polyolefin resin composition was prepared by adding a double hydroxide M (trade name: LMA manufactured by Fuji Chemical industries, Ltd.) (8 wt. %) and a hindered amine compound A (trade name: TINUVIN 622-LD manufactured by Ciba-Geigy) (0.6 wt. %) to an ethylene-vinyl acetate copolymer (vinyl acetate content 15 wt. %, density = 0.94 g/cm³), MFR = 1.1 g/10 min.).

To the polyolefin resin composition (100 wt. parts), an antioxidant H (trade name: IRGANOX 1010 manufactured by Ciba-Geigy) (0.1 wt. part), monoglycerin monostearate (an anti-sticking agent) (1.4 wt. parts), diglycerin distearate (an anti-sticking agent) (0.6 wt. part) and stearic acid amide (a lubricant) (0.2 wt. part) were added and kneaded with a Banbury mixer at 130°C for 5 minutes, and pelletized by an pelletizer to obtain pellets of the resin composition. This composition was designated as Resin Composition (1).

Separately, an ethylene-vinyl acetate copolymer (trade name: EVATATE D2011 manufactured by Sumitomo Chemical Co., Ltd.), the hindered amine compound A (0.6 wt. %), the antioxidant H (0.1 wt. part), monoglycerin monostearate (1.4 wt. parts), diglycerin distearate (0.6 wt. part), and stearic acid amide (0.2 wt. part) (total amounts being 100 wt. %) were processed In the same manner as in the preparation of Resin Composition (1) to obtain pellets, which was designated as Resin Composition (2).

A two-kind three-layer film was formed with a blown-film extruder, which film consisted of an intermediate layer of Resin Composition (1) and outer layers of Resin Composition (2) and had a film thickness of 0.1 mm (a thickness of the intermediate layer = 0.06 mm. a thickness of each outer layer = 0.02 mm) This film was subjected to the weathering test As shown in Table 1, the film had excellent weather resistance.

### Example 2

A two-kind three-layer film was formed in the same manner as in Example 1 except that a UV light absorber U (trade name: SUMISORB 130 manufactured by Sumitomo chemical Co., Ltd.) (0.01 wt. part) was further compounded in each of Resin Compositions (1) and (2), and subjected to the weathering test. As shown in Table 1, the film had excellent weather resistance.

### Example 3

A two-kind three-layer film was formed in the same manner as in Example 1 except that the UV light absorber U (0.01 wt. part) was further compounded in each of Resin Compositions (1) and (2), and the double hydroxide M (2 wt. %) was further compounded in Resin Composition (2), and subjected to the weathering test. As shown in Table 1, the film had excellent weather resistance.

### Example 4

A two-kind three-layer film was formed in the same manner as in Example 1 except that a double hydroxide L (trade name: FUJIRAIN LS manufactured by Fuji Chemical Industries, Co., Ltd.) (8 wt. %) was used in place of the double hydroxide M, and subjected to the weathering test. As shown in Table 1, the film had excellent weather resistance.

### Comparative Example 1

A two-kind three-layer film was formed In the same manner as in Example 1 except that silicon oxide S (trade name: SNOW MARK SP-10 manufactured by KINSEI MATIC Co. Ltd.) (10 wt. %) was used in place of the double hydroxide M, and subjected to the weathering test. As shown in Table 1, the film had poor weather resistance.

### Example 5

A polyolefin resin composition was prepared by adding the double hydroxide M (8 wt. %), the hindered amine compound A (0.3 wt. %) and a hindered amine compound B (trade name: CIMASORB 944-LD manufactured by Ciba-Geigy) (0.3 wt. %) to an ethylene-vinyl acetate copolymer (vinyl acetate content = 15 wt. %, density = 0.94 g/cm³), MFR = 1.1 g/10 min.).

To the polyolefin resin composition (100 wt. parts), the UV light absorber U (0.1 wt. part), the antioxidant H (0.1 wt. part), monoglycerin monostearate (an anti-sticking agent) (1.4 wt. parts), diglycerin distearate (an anti-sticking agent) (0.6 wt. part), stearic acid amide (a lubricant) (0.2 wt. part) and a fluorine-containing surfactant F (an anti-fogging agent) (trade name: DS-403 manufactured by Daikin Industries Ltd.) (0.1 wt. part) were added and kneaded with a Banbury mixer at 130°C for 5 minutes, and pelletized by an pelletizer to obtain pellets of the resin composition. This composition was designated as Resin Composition (3).

Separately, an ethylene-vinyl acetate copolymer (trade name: EVATATE D2011 manufactured by Sumitomo Chemical Co., Ltd.), the hindered amine compound A (0.6 wt. %), the UV light absorber U (0.1 wt. %), the antioxidant H (0.1 wt. part), monoglycerin monostearate (1.4 wt. parts), diglycerin distearate (0.6 wt. part), stearic acid amide (0.2 wt. part), and the fluorine-containing surfactant F (0.1 wt. %) (total amounts being 100 wt. %) were processed in the same manner as In the preparation of Resin Composition (3) to obtain pellets, which was designated as Resin Composition (4).

A two-kind three-layer film was formed with a blown-film extruder, which film consisted of an intermediate layer of Resin Composition (3) and outer layers of Resin Composition (4) and had a film thickness of 0.1 mm (a thickness of the intermediate layer = 0.06 mm. a thickness of each outer layer = 0.02 mm) was formed with a blown-film extruder. This film was subjected to the weathering test. As shown in Table 1, the film had excellent weather resistance.

### Example 6

A two-kind three-layer film was formed in the same manner as In Example 5 except that the double hydroxide M (2 wt. %) was further compounded in Resin Composition (4), and subjected to the weathering test. As shown in Table 1, the film had excellent weather resistance.

### Example 7

A two-kind three-layer film was formed in the same manner as in Example 5 except that the amount of the double hydroxide M in Resin Composition (3) was changed from 8 wt. % to 2 wt. % and the silicon oxide S (10 wt. %) was further compounded in Resin Composition (3), and subjected to the weathering test. As shown in Table 1, the film had excellent weather resistance.

### Example 8

A two-kind three layer film was formed In the same manner as in Example 5 except that a combination of the double hydroxide L (2.0 wt. %) and the silicon oxide S (10.0 wt. %) was used in place of the double hydroxide M (8.0 wt. %) in Resin Composition (3), and subjected to the weathering test As shown in Table 1, the film had excellent weather resistance.

### Comparative Example 2

A two-kind three-layer film was formed in the same manner as in Example 5 except that the silicon oxide S (10 wt. %) was used in place of the double hydroxide M (8 wt. %) in Resin Composition (3), and subjected to the weathering test. As shown in Table 1, the film had poor weather resistance.

### Example 9

A polyolefin resin composition was prepared by adding the double hydroxide M (8 wt. %) and the hindered amine compound B (0.6 wt. %) to an ethylene-vinyl acetate copolymer (vinyl acetate content = 15 wt. %, density = 0.94 g/cm³), MFR = 1.1 g/10 min.).

To the polyolefin resin composition (100 wt. parts), the UV light absorber U (0.1 wt. part), the antioxidant H (0.1 wt. part), monoglycerin monostearate (an anti-sticking agent) (1.4 wt. parts), diglycerin distearate (an anti-sticking agent) (0.6 wt. part) and stearic acid amide (a lubricant) (0.2 wt. part) were added and kneaded with a Banbury mixer at 130°C for 5 minutes, and pelletized by an pelletizer to obtain pellets of the resin composition. This composition was designated as Resin Composition (5).

Separately, an ethylene-vinyl acetate copolymer (trade name: EVATATE D2011 1 manufactured by Sumitomo Chemical Co., Ltd.), the hindered amine compound A (0.3 wt. %), the hindered amine compound B (0.3 wt. %), the UV light absorber U (0.1 wt. %), the antioxidant H (0.1 wt. part), monoglycerin monostearate (1.4 wt. parts), diglycerin distearate (0.6 wt. part) and stearic acid amide (0.2 wt. part) (total amounts being 100 wt. %) were processed in the same manner as in the preparation of Resin Composition (5) to obtain pellets, which was designated as Resin Composition (6).

A two-kind three-layer film was formed with a blown-film extruder, which film consisted of an intermediate layer of Resin Composition (5) and outer layers of Resin Composition (6) and had a film thickness of 0.1 mm (a thickness of the intermediate layer = 0.06 mm. a thickness of each outer layer = 0.02 mm) was formed. This film was subjected to the weathering test. As shown In Table 1, the film had excellent weather resistance.

### Example 10

A two-kind three-layer film was formed in the same manner as in Example 9 except that the double hydroxide L (8 wt. %) was used in place of the double hydroxide M (8 wt. %) in Resin Composition (5), and subjected to the weathering test. As shown in Table 1, the film had excellent weather resistance.

### Comparative Example 3

A two-kind three-layer film was formed in the same manner as in Example 9 except that the silicon oxide S (10 wt. %) was used In place of the amount of the double hydroxide M (8 wt. %) in Resin Composition (5), and subjected to the weathering test. As shown in Table 1, the film had poor weather resistance.

### Example 11

A polyolefin resin composition was prepared by adding the double hydroxide M (8 wt. %) and the hindered amine compound A (0.6 wt. %) to an ethylene-vinyl acetate copolymer (trade name: EVATATE D2011 manufactured by Sumitomo Chemical Co., Ltd.).

To the polyolefin resin composition (100 wt. parts), the antioxidant H (0.1 wt. part), monoglycerin monostearate (an anti-sticking agent) (1.4 wt. parts), diglycerin distearate (an anti-sticking agent) (0.6 wt. part) and stearic acid amide (a lubricant) (0.2 wt. part) were added and kneaded with a Banbury mixer at 130°C for 5 minutes, and pelletized by an pelletizer to obtain pellets of the resin composition.

A film having a thickness of 0.075 mm was formed from the pellets with a blow-film extruder. This film was subjected to the weathering test. As shown in Table 2, the film had excellent weather resistance.

### Example 12

A layer was formed in the same manner as in Example 11 except that the UV light absorber was further compounded in the resin composition, and subjected to the weathering test. As shown in Table 2, the film had poor weather resistance.

### Example 13

A layer was formed in the same manner as in Example 11 except that the double hydroxide L (8 wt. %) was used in place of the amount of the double hydroxide M (8 wt. %) in the resin composition, and subjected to the weathering test. As shown in Table 2, the film had poor weather resistance.

### Comparative Example 4

A film was formed in the same manner as in Example 11 except that the silicon oxide S (10 wt. %) was used in place of the double hydroxide M (8 wt. %) in the resin composition, and subjected to the weathering test. As shown in Table 2, the film had poor weather resistance.

### Example 14

A polyolefin resin composition was prepared by adding the double hydroxide M (8 wt. %), the hindered amine compound A (0.3 wt. %) and the hindered amine compound B (0.3 wt. %) to an ethylene-vinyl acetate copolymer (trade name: EVATATE D2011 manufactured by Sumitomo Chemical Co., Ltd.).

To the polyolefin resin composition (100 wt. parts), the UV light absorber U (0.1 wt. part), the antioxidant H (0.1 wt. part), monoglycerin monostearate (an anti-sticking agent) (1.4 wt. parts), diglycerin distearate (an anti-sticking agent) (0.6 wt. part) and stearic acid amide (a lubricant) (0.2 wt. part) were added and kneaded with a Banbury mixer at 130°C for 5 minutes, and pelletized by an pelletizer to obtain pellets of the resin composition.

Then, a film having a thickness of 0.075 mm was formed in the same manner as in Example 11 except that the above produced the pellets were used. This film was subjected to the weathering test. As shown in Table 2, the film had excellent weather resistance.

### Example 15

A film was formed In the same manner as in Example 14 except that the amount of the double hydroxide M was changed from 8 wt. % to 2 wt. % and the silicon oxide S (10 wt. %) was further compounded In the resin composition, and subjected to the weathering test. As shown In Table 2, the film had excellent weather resistance.

### Comparative Example 5

A film was formed in the same manner as in Example 14 except that the silicon oxide S (10 wt. %) was used in place of the double hydroxide M (8 wt. %) in the resin composition, and subjected to the weathering test. As shown in Table 2, the film had poor weather resistance.

### Example 16

A polyolefin resin composition was prepared by adding the double hydroxide M (8 wt. %), the hindered amine compound B (0.6 wt. %) to an ethylene-vinyl acetate copolymer (trade name: EVATATE D2011 manufactured by Sumitomo Chemical Co., Ltd.).

To the polyolefin resin composition (100 wt. parts), the UV light absorber U (0.1 wt. part), the antioxidant H (0.1 wt. part), monoglycerin monostearate (an anti-sticking agent) (1.4 wt. parts), diglycerin distearate (an anti-sticking agent) (0.6 wt. part) and stearic acid amide (a lubricant) (0.2 wt. part) were added and kneaded with a Banbury mixer at 130°C for 5 minutes, and pelletized by an pelletizer to obtain pellets of the resin composition.

Then, a film having a thickness of 0.075 mm was formed in the same manner as in Example 11 except that the above produced the pellets were used. This film was subjected to the weathering test. As shown in Table 2, the film had excellent weather resistance.

### Example 17

A film was formed in the same manner as in Example 16 except that the double hydroxide L (8 wt. %) was used in place of the double hydroxide M (8 wt. %), and subjected to the weathering test. As shown in Table 2, the film had excellent weather resistance.

### Comparative Example 6

A film was formed In the same manner as in Example 16 except that the silicon oxide S (10 wt. %) was used in place of the double hydroxide M (8 wt. %) in the resin composition, and subjected to the weathering test. As shown in Table 2, the film had poor weather resistance.

In the Tables, "%: and "parts" are by weight except for HAZE

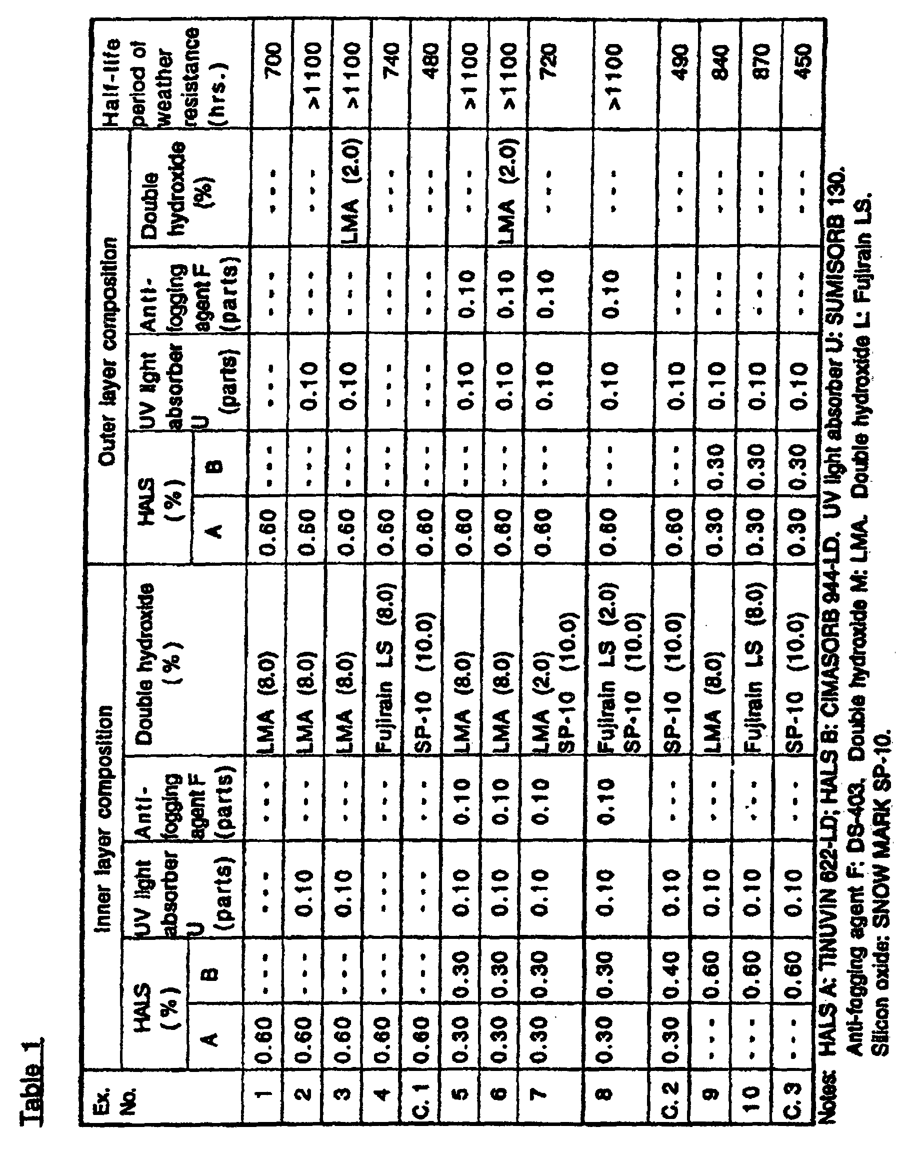

**Table 2**

| Ex. No. | HALS (%) | | UV light absorber (parts) | Double hydroxide | | Half-life period of weather resistance (hrs.) | HAZE (%) (transmission of light) |
|---|---|---|---|---|---|---|---|
| | A | B | | Kind | % | | |
| 11 | 0.60 | --- | --- | LMA | 8.0 | 600 | 4.5 (91.8) |
| 12 | 0.60 | --- | 0.10 | LMA | 8.0 | >1100 | 8.2 (92.0) |
| 13 | 0.60 | --- | 0.10 | Fujirain LS | 8.0 | >1100 | 27.2 (92.2) |
| C.4 | 0.60 | --- | --- | SP-10 | 10.0 | 320 | |
| 14 | 0.30 | 0.30 | --- | LMA | 8.0 | >1100 | |
| 15 | 0.30 | 0.30 | 0.10 | LMA | 2.0 | 500 | |
| | | | | SP-10 | 10.0 | | |
| C.5 | 0.30 | 0.30 | 0.10 | SP-10 | 8.0 | 310 | |
| 16 | --- | 0.60 | 0.10 | LMA | 8.0 | 750 | |
| 17 | --- | 0.60 | 0.10 | Fujirain LS | 8.0 | 750 | |
| C.6 | --- | 0.60 | 0.10 | SP-10 | 10.0 | 300 | |
| Notes: See Notes for Table 1. | | | | | | | |

## Claims

1. A polyolefin resin composition comprising
a polyolefin resin,
not less than 0.03 wt. % and less than 12 wt. %, based on the weight of whole composition, of a double hydroxide comprising lithium, aluminum and at least one element selected from the group consisting of alkaline earth elements, transition metals, Zn and Si, and
0.02 to 5 wt. %, based on the weight of whole composition, of a hindered amine compound.

2. The polyolefin resin composition according to claim 1, which further comprises 0.01 to 3 wt. parts of a UV light absorber per 100 wt. parts of the resin composition.

3. A film having at least one layer comprising a polyolefin resin composition according to any of claims 1 and 2.

4. A film obtainable by forming a polyolefin resin composition according to any of claims 1 and 2, wherein the content of the double hydroxide is in the range of not less than 0,03 wt% and 7,820 wt% based on the weight of the whole film.

5. Use of a polyolefin resin composition according to any of claims 1 and 2 in the application for horticulture.

6. Use of a film according to claim 3 or 4 as an agricultural film.

7. The use according to claim 6, wherein said agricultural film is an agricultural covering film.

8. Use of a polyolefin resin composition comprising 0.03 to 60 wt %, based on the weight of whole composition, of a double hydroxide comprising lithium, aluminum and at least one element selected from the group consisting of alkaline earth elements, transition metals, Zn and Si, and 0.02 to 5 wt %, based on the weight of whole composition, of a hindered amine compound for the preparation of a film for improving weather resistance.

9. Use of a polyolefin resin composition according to claim 1 or 2 for the preparation of a film for improving weather resistance.

10. Use of a double hydroxide as defined in claim 1 in an amount of not less than 0.03 wt.% and less than 12 wt.% and a hindered amine compound in an amount of 0.02 to 5 wt.% for improving the weather resistance of a polyolefin resin composition or a film having at least one layer comprising a polyolefin resin composition, wherein the amounts are based on the weight of the whole resin composition.

## Patentansprüche

1. Polyolefinharzmasse, umfassend
ein Polyolefinharz,
nicht weniger als 0,03 Gew.-% und weniger als 12 Gew.-%, basierend auf dem Gewicht der gesamten Zusammensetzung, einer Doppelhydroxidverbindung, welche Lithium, Aluminium und mindestens ein Element, ausgewählt aus Erdalkalimetallelementen, Übergangsmetallen, Zn und Si, umfasst und
0,02 bis 5 Gew.-%, basierend auf dem Gewicht der gesamten Zusammensetzung, einer gehinderten Aminverbindung.

2. Polyolefinharzmasse gemäß Anspruch 1, welche weiterhin 0,01 bis 3 Gewichtsteile eines UV-Lichtabsorbers pro 100 Gewichtsteile der Harzmasse umfasst.

3. Folie, welche mindestens eine Schicht aufweist, die eine Polyolefinharzmasse gemäß einem der Ansprüche 1 und 2 umfasst.

4. Folie erhältlich durch Erzeugen einer Polyolefinharzmasse gemäß einem der Ansprüche 1 und 2, wobei der Gehalt der Doppelhydroxidverbindung im Bereich von nicht weniger als 0,03 Gew.-% und 7,820 Gew.-% ist, basierend auf dem Gewicht der gesamten Folie.

5. Verwendung einer Polyolefinharzmasse gemäß einem der Ansprüche 1 und 2 in einer Anwendung im Gartenbau.

6. Verwendung einer Folie gemäß Anspruch 3 oder 4 als eine landwirtschaftlich genutzte Folie.

7. Verwendung gemäß Anspruch 6, wobei die landwirtschaftlich genutzte Folie eine landwirtschaftlich genutzte Abdeckfolie ist.

8. Verwendung einer Polyolefinharzmasse, umfassend 0,03 bis 60 Gew.-%, basierend auf dem Gewicht der gesamten Zusammensetzung, einer Doppelhydroxidverbindung, welche Lithium, Aluminium und mindestens ein Element, ausgewählt aus Erdalkalimetallelementen, Übergangsmetallen, Zn und Si, umfasst und 0,02 bis 5 Gew.-%, basierend auf dem Gewicht der gesamten Zusammensetzung, einer gehinderten Aminverbindung zur Herstellung einer Folie, zum Verbessern der Wetterbeständigkeit.

9. Verwendung einer Polyolefinharzmasse gemäß Anspruch 1 oder 2 zur Herstellung einer Folie zum Verbessern der Wetterbeständigkeit.

10. Verwendung einer Doppelhydroxidverbindung wie im Anspruch 1 definiert in einer Menge von nicht weniger als 0,03 Gew.-% und weniger als 12 Gew.-% und einer gehinderten Aminverbindung in einer Menge von 0,02 bis 5 Gew.-% zum Verbessern der Wetterbeständigkeit einer Polyolefinharzmasse oder einer Folie, welche mindestens eine Schicht, umfassend eine Polyolefinharzmasse, aufweist, wobei die Mengen auf das Gewicht der gesamten Harzmasse bezogen sind.

## Revendications

1. Composition de résine de polyoléfine comprenant
une résine de polyoléfine,
pas moins de 0,03 % en poids et moins de 12 % en poids, rapporté au poids de la composition totale, d'un hydroxyde double comprenant du lithium, de l'aluminium et au moins un élément choisi dans le groupe constitué par des éléments alcalino-terreux, des métaux de transition, Zn et Si, et
0,02 à 5 % en poids, rapporté au poids de la composition totale, d'un composé amine encombrée.

2. Composition de résine de polyoléfine selon la revendication 1, qui comprend en outre 0,01 à 3 parties en poids d'un absorbeur de lumière UV pour 100 parties en poids de la composition de résine.

3. Film ayant au. moins une couche comprenant une composition de résine de polyoléfine selon l'une quelconque des revendications 1 et 2.

4. Film pouvant être obtenu en formant une composition de résine de polyoléfine selon l'une quelconque des revendications 1 et 2, dans lequel la quantité d'hydroxyde double est dans la plage non inférieure à 0,03 % en poids et 7,820 % en poids, rapporté au poids du film total.

5. Utilisation d'une composition de résine de polyoléfine selon l'une quelconque des revendications 1 et 2 dans l'application pour l'horticulture.

6. Utilisation d'un film selon la revendication 3 ou 4 comme film en agriculture.

7. Utilisation selon la revendication 6, dans laquelle ledit film pour agriculture est un film de revêtement pour agriculture.

8. Utilisation d'une composition de résine de polyoléfine comprenant 0,03 à 60 % en poids, rapporté au poids de la composition totale, d'un hydroxyde double comprenant du lithium, de l'aluminium et au moins un élément choisi dans le groupe constitué par dès éléments alcalino-terreux, des métaux de transition, Zn et Si, et 0,02 à 5 % en poids, rapporté au poids de la composition totale, d'un composé amine encombrée, pour la préparation d'un film pour améliorer la résistance au intempéries.

9. Utilisation d'une composition de résine de polyoléfine selon la revendication 1 ou 2, pour la préparation d'un film pour améliorer la résistance aux intempéries.

10. Utilisation d'un hydroxyde double tel que défini dans la revendication 1 en une quantité non inférieure à 0,03 % en poids et inférieure à 12 % en poids et d'un composé amine encombrée en une quantité de 0,02 à 5 % en poids, pour améliorer la résistance aux intempéries d'une composition de résine de polyoléfine ou d'un film ayant au moins une couche comprenant une composition de résine de polyoléfine, dans laquelle les quantités sont basées sur le poids de la composition de résine totale.
